# EUROPÄISCHE PATENTANMELDUNG

(11) **EP 1 952 900 A1**
(43) Veröffentlichungstag der Anmeldung: **06.08.2008**
(21) Anmeldenummer: 07011010.1
(22) Anmeldetag: 05.06.2007
(51) Int. Cl.: B08B 9/08, B08B 9/32, B65G 29/02

(54) **Vorrichtung zum Reinigen von Behältnissen**

(30) Priorität: 30.01.2007 DE 102007005478; 15.02.2007 DE 102007008028
(71) Anmelder: Klotzki, Ulrich, 93073 Neutraubling (DE)
(72) Erfinder: Klotzki, Ulrich, 93073 Neutraubling (DE)
(74) Vertreter: Graf, Helmut

(57) **Zusammenfassung**

Vorrichtung zum Reinigen von Behältnissen (6), z.B. von Behältnissen von Flaschen mit einer wendelartigen Transporteinrichtung, auf der die Behältnisse durch eine Reaktionskammer (1) auf einer Transportstrecke zwischen einer Beschickungsstation (15) und einer Entnahmestation (17) transportiert werden, wobei die Transportstrecke von einer wendelartigen Führung (30) und von einer um die Achse der wendelartigen Führung umlaufend antreibbaren Vorschubeinrichtung (33) gebildet ist.

## Beschreibung

Die Erfindung bezieht sich auf eine Vorrichtung gemäß Oberbegriff Patentanspruch 1. Eine Vorrichtung dieser Art ist bekannt (DE 101 16 854 A1).

Bei der bekannten Vorrichtung werden die Behältnisse auf einer Transporteinrichtung durch wenigstens eine Reinigungskammer bewegt. Diese ist von einer eine vertikale Maschinen- oder Vorrichtungsachse schraubenlinienartig umschließenden bzw. gewendelten Führung oder Transportstrecke gebildet, auf der die Behältnisse gleitend durch eine Vorschubeinrichtung von einer Beschickungsposition an eine Entnahmeposition bewegt werden. Mit äußeren Spritzdüsen werden die Behältnisse dabei durch Abspritzen mit einer Reinigungsflüssigkeit behandelt bzw. gereinigt.

Aufgabe der Erfindung ist es, den Reinigungsvorgang zu verbessern. Zur Lösung dieser Aufgabe ist eine Vorrichtung entsprechend dem Patentanspruch 1 ausgebildet.

Bei der erfindungsgemäßen Vorrichtung sind an dem die Behältnisse auf der Transportstrecke bewegenden Vorschubeinrichtung mit dieser mitbewegte Düsen vorgesehen, und zwar in Transportrichtung beabstandet von den Mitnehmer- oder Anlageflächen, die die Vorschubeinrichtung oder dortigen Mitnehmer für die Behältnisse bildet, so dass die Behältnisse auch an ihren in Transportrichtung nacheilenden und vorauseilenden Seiten von diesen Seiten in Transportrichtung gegenüber liegenden Spritz- oder Reinigungsdüsen optimal behandelt werden. Die Mitnehmer sind bei der Erfindung beispielsweise stangenartige Elemente, die sich parallel zur Achse der wendelartigen Transportstrecke erstrecken. Bevorzugt sind die Mitnehmer aber jeweils von finger- oder stangenartigen Elementen gebildet, die mit freien Enden gegen die Behältnisse anliegen, so dass diese nur auf einen sehr geringen Teil ihrer Fläche durch die Mitnehmer abgedeckt sind.

Weiterbildungen der Erfindung sind Gegenstand der Unteransprüche. Die Erfindung wird im Folgenden anhand der Figuren an einem Ausführungsbeispiel näher erläutert.
Es zeigen:
- Fig. 1: eine Waschanlage gemäß der Erfindung in Seitenansicht;
- Fig. 2: eine Draufsicht auf die Waschanlage der Figur 1;

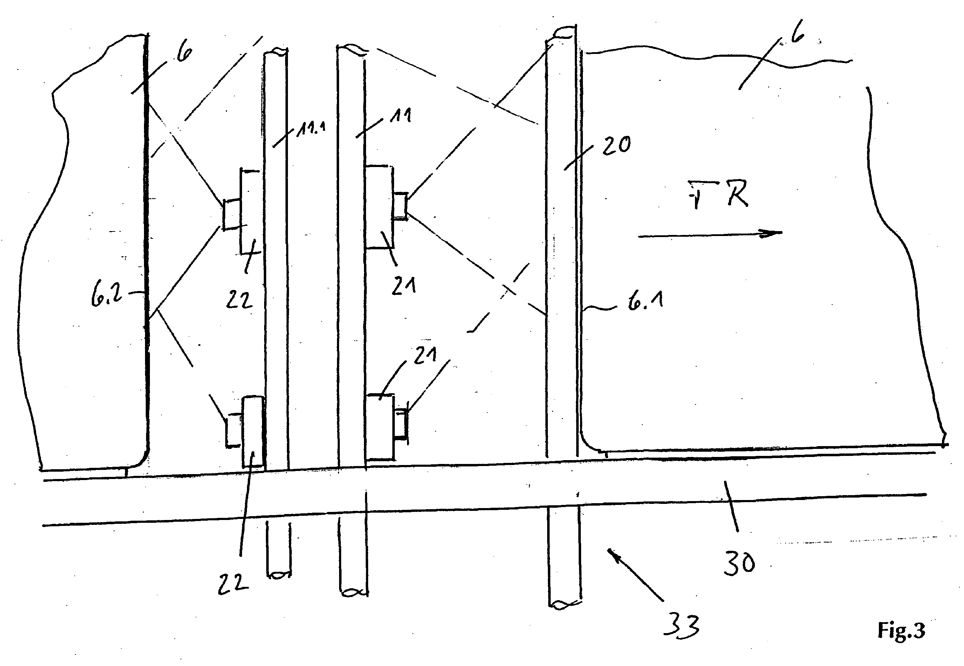

- Fig. 3: in schematischer Teildarstellung die Transportstrecke mit Vorschubeinheit;
- Fig. 4 und 5: weitere Ausführungsformen der Erfindung;
- Fig. 6: in perspektivischer Teildarstellung zwei Führungselemente der Förderstrecke bildende Rohre zusammen mit einem auf den Führungselementen angeordneten Behältnis und mit an den Führungselementen angeordneten Spritzdüsen.

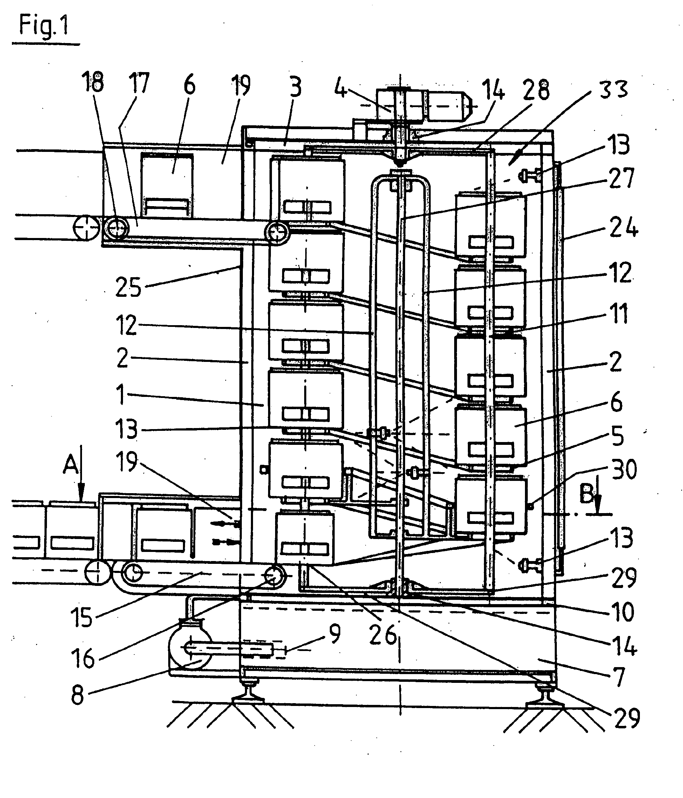

Fig. 1 zeigt in einem Aufriss der Waschanlage den Innenraum der Reinigungskammer 1 mit der Transportstrecke für die Behältnisse 6, mit der Beschickungseinrichtung 15 und mit der Entladestation 17, sowie die beidseitig an die Förderstrecke für die Behältnisse 6 angeordneten Führungselemente 30. Die Reinigungskammer 1 besteht aus einem vertikalen Rahmen aus vertikalen Rohrträgern 2 und horizontal angeordneten Verbindungsträgern 3, in deren Hohlräumen die Reinigungsflüssigkeit zu den Spritzdüsen 13 strömt. Die vertikalen Rohrträger 2, üblicherweise vier Stück, die eine rechteckige, gleichschenklige Grundfläche beschreiben, sind über horizontale Verbindungsträger 3 miteinander verbunden. Die Reinigungskammer 1 ist nach außen mit Abdeckblechen 25 spritzwasserdicht umschlossen, die Montageöffnungen aufweisen, die ihrerseits mit zum Teil durchsichtigen, abnehmbaren Verkleidungen 24 verschlossen sind. Die Behältnisse 6 werden von der Beschickungseinrichtung 15 zur, auf gleichem Förderniveau angrenzenden Wendelplattform 26 angeliefert und von dort mittels der Mitnehmer oder Stangen 11 und/oder anderer Fördermittel zur Wendel 5 geschoben und über diese in einer Transportrichtung TR durch die Reinigungskammer 1 entlang der, z.B. einstellbaren Spritzdüsen 13 zum Ende der Reinigungskammer an die Entladestation 17 transportiert.

Die Reinigungsflüssigkeit ist in einem Vorratstank 7 aufbewahrt, aus dem sie mittels einer Pumpe 8 über eine Filtereinrichtung 9 abgesaugt und zu den Spritzdüsen 13, die mit Verteilerohren 10, 27 und den Düsenträger 12 verbunden sind, gedrückt wird. Beim Ausführungsbeispiel sind die zentrisch innerhalb der Wendel vorgesehenen Spritzdüsen 13 auf einem U-förmig gebogenen, vertikal nach unten und koaxial zu einem Verteilerrohr 27 im Zentrum der Wendel 5 durch die Reinigungskammer 1 verlaufenden Düsenträger 12 angeordnet. Die Spritzdüsen 13 könnten aber ebenso gut gleich auf dem Verteilerrohr 27 befestigt sein.

Stangen 11 sind mit ihren Enden jeweils am äußeren Ende eines Armes eines unteren und oberen mehrarmigen Drehkreuzes 29, 28 befestigt. An den Drehkreuzen 28 und 29 bzw. an deren Armen-sind weitere Stangen 20 gehalten, und zwar jeweils mit einem abgewinkelten Ende derart, dass wenigstens jeweils eine weitere Stange 20 einer Stange 11 zugeordnet und parallel zu dieser vorgesehen ist und der ihr zugeordneten Stange 11 in Transport- oder Drehrichtung TR voreilt. Die Drehkreuze 28 und 29 und die Stangen 11 und 20 bilden eine drehkreuzartige Vorschubeinrichtung 33, die zusammen mit Führungselementen 30 die Transportstrecke bildet.

Das obere Drehkreuz 28 wird von einem Vorschubantrieb 4 in Rotation (Pfeil TR) versetzt, so dass die Vorschubeinrichtung 33 synchron mit den Antrieben 16 und 18 des Vorschubs der Beschickungseinrichtung 15 und der Entladestation 17 umläuft und so weder beim Beladen noch beim Entladen der Reinigungskammer ein Stau der Behältnisse 6 auftritt. Die Beschickungseinrichtung 15 und Entladestation 17 werden zweckmäßigerweise je von einem Bandförderer gebildet. Die Drehkreuze 28 und 29 sind um eine vertikale Achse drehbar in Lagern 14 gelagert.

Die Beschickung der Reinigungskammer ist wahlweise sowohl von unten als auch von oben möglich. Entsprechend der Wahl der Anordnung der Beschickungseinrichtung 15 und der Entladestation 17 ändert sich die Pfeilrichtung 19 zwischen Be- und Entladung.

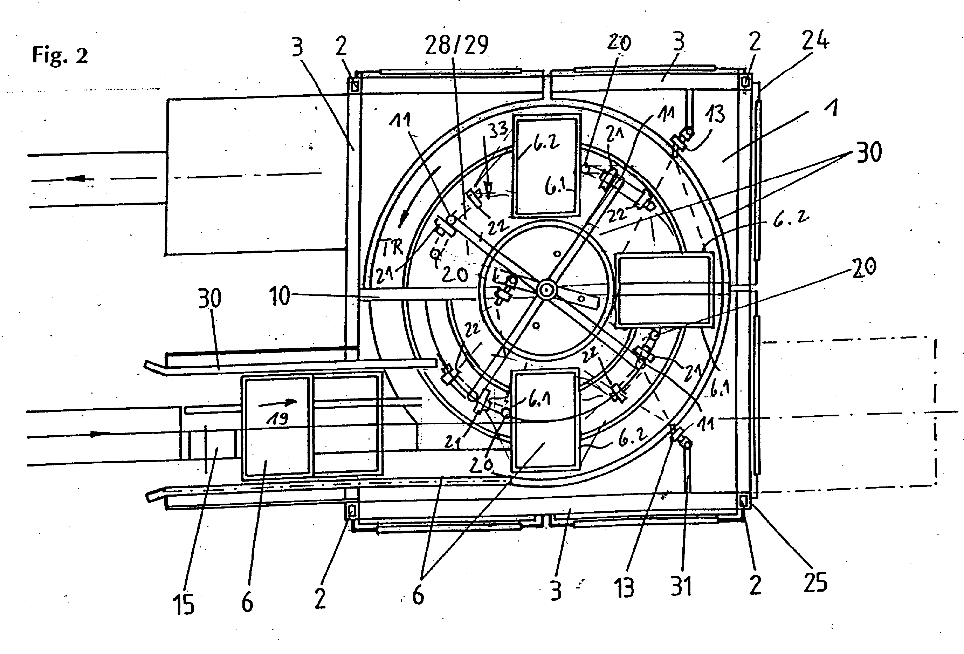

Fig. 2 ist ein Querschnitt durch die Reinigungskammer 1. Möglichkeiten für die Befestigung der Spritzdüsen 13 sind hieraus erkennbar. Ebenso sind in diesem Beispiel die mehrarmigen Drehkreuze 28 und 29 mit vier Armen und die inneren und äußeren Führungselemente 30 dargestellt. An den Enden der Arme der Drehkreuze 28, 29 sind die jeweiligen Stangen 11 und 20 befestigt, die den Vorschub der Behältnisse 6 über die Wendel 5 bewirken.

Eine Besonderheit der Erfindung besteht darin, dass nicht die Stangen 11 gegen die Behältnisse 6 anliegen, sondern von diesen in Transportrichtung beabstandete und vorauseilende Mitnehmer, die bei der dargestellten Ausführungsform von den Stangen 20 gebildet sind, die die Behälteranlageflächen bilden. An den Stangen 11 oder an Tragelementen 11.1, die an diesen Stangen oder der Vorschubeinrichtung 33 befestigt sind, ist eine Vielzahl von Spritzdüsen 21 und 22 vorgesehen, von denen die Spritzdüsen 21 bzw. deren Wirkungsachsen in Drehrichtung TR der Vorschubeinheit 33 und von denen die Spritzdüsen 22 entgegen der Drehrichtung TR orientiert sind, so dass die Behältnisse 6 beim Bewegen durch die Reinigungskammer bzw. auf der wendelartigen Förderstrecke mit dem aus den Düsen 21 austretenden Reinigungsmedium an der in Transportrichtung TR jeweils rückwärtigen Seite 6.1 und mit dem aus den Düsen 22 austretenden Reinigungsmedium an der in Bewegungsrichtung vorderen Seite 6.2 behandelt und intensiv gereinigt werden. Die Düsen 21 und 22 sind den Seiten 6.1 und 6.2 der Behältnisse 6 jeweils in der oder entgegen der Transportrichtung unmittelbar gegenüber liegend vorgesehen. Die Versorgung der Düsen 21 und 22 erfolgt beispielsweise über die Pumpe 8 und einen Drehverteiler sowie über Kanäle in der Vorschubeinheit 33, wobei diese Kanäle beispielsweise zumindest teilweise in den die Vorschubeinheit 33 bildenden Elementen ausgeführt sind.

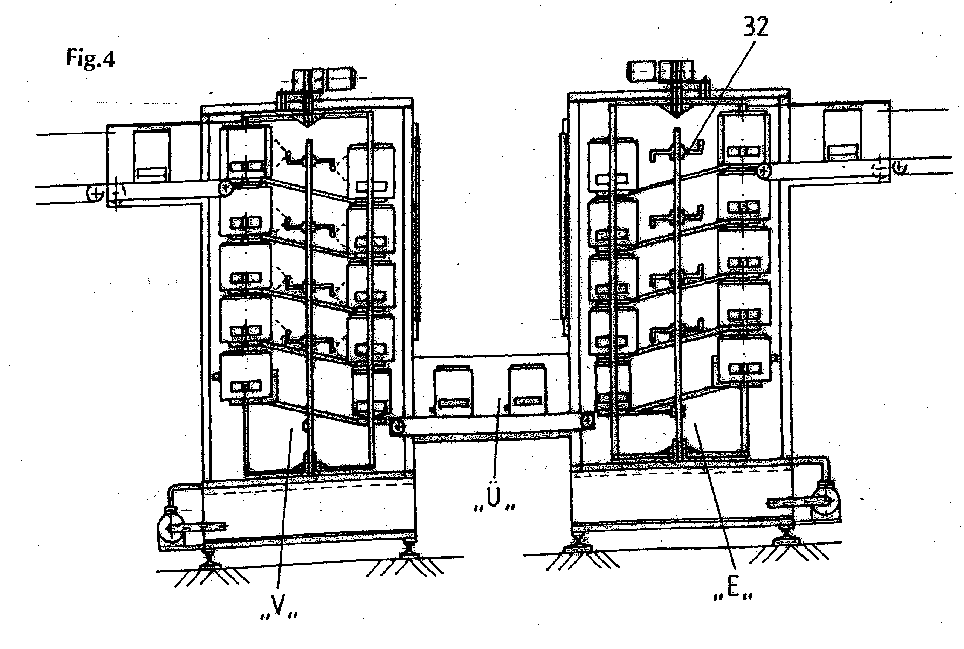

In Fig. 4 ist ein Ausführungsbeispiel dargestellt bei dem eine erste Vorreinigungsstrecke "V" vorgesehen ist, die beispielsweise von oben mit verschmutzten Behältnissen beschickt wird und die am Ende der Vorreinigung über eine Übergabestrecke "Ü" die vorgereinigten Behältnisse an eine Endreinigungsstrecke "E" übergibt, aus der die gereinigten Behältnisse an einer Entladestation ausgegeben werden. Sowohl die Vorreinigungsstrecke "V" als auch die Endreinigungsstrecke entsprechen in ihrem jeweiligen Aufbau der in Fig. 1 dargestellten Waschstraße für Behältnisse zur Aufbewahrung z.B. von Flaschen, nur mit geänderter Förderrichtung. Je nach Notwendigkeit und Verschmutzungsrad der zu reinigenden Behältnisse können beliebig viele in Fig. 1 beschriebenen Waschstraßen, wie beispielsweise für zwei in Fig. 4 dargestellt, hintereinander angeordnet und miteinander verbunden werden. Vorteilhaft ist es, abhängig vom Verschmutzungsrad, die erste Stufe mit kaltem und die folgende Stufe mit heißem Wasser zu betreiben. Damit wird der grobe Schmutz bereits mit kaltem Wasser abgespült und die Endreinigung, die mit heißem Wasser erfolgt, heizt gleichzeitig die zu reinigenden Behältnisse auf, so dass sie dadurch nach der Reinigung schneller trocknen.

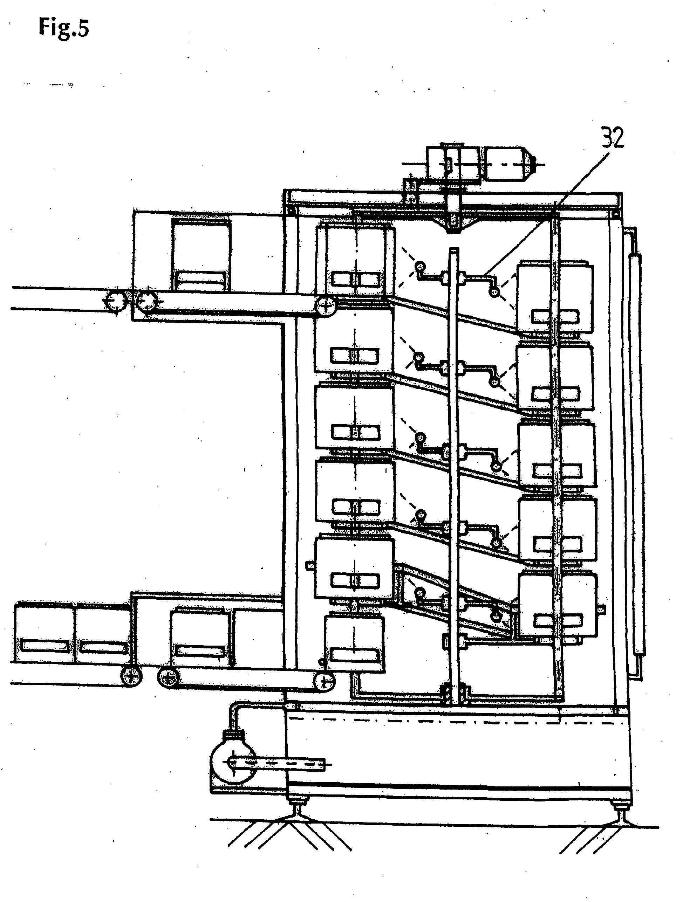

Die Figur 5 zeigt als weitere mögliche Ausführungsform eine Waschstraße, bei der zentrisch auf dem innen liegenden konzentrisch zur Reinigungskammer 1 angeordneten Düsenhalterohr 27 rotierende Düsen 32 vorgesehen sind, die in Form von Reaktionsturbinen (Segersches Wasserrad) arbeiten.

Grundsätzlich besteht auch die Möglichkeit, die Behältnisse 6 beim Bewegen durch die Reinigungskammer mit unterschiedlichen Medien zu behandeln, und zwar dadurch, dass die in vertikaler Richtung aufeinander folgenden Spritzdüsen 13, 21, 22 bzw. 32 bzw. von diesen Düsen gebildete Gruppen jeweils mit einem unterschiedlichen Reinigungs- oder Behandlungsmedium versorgt werden.

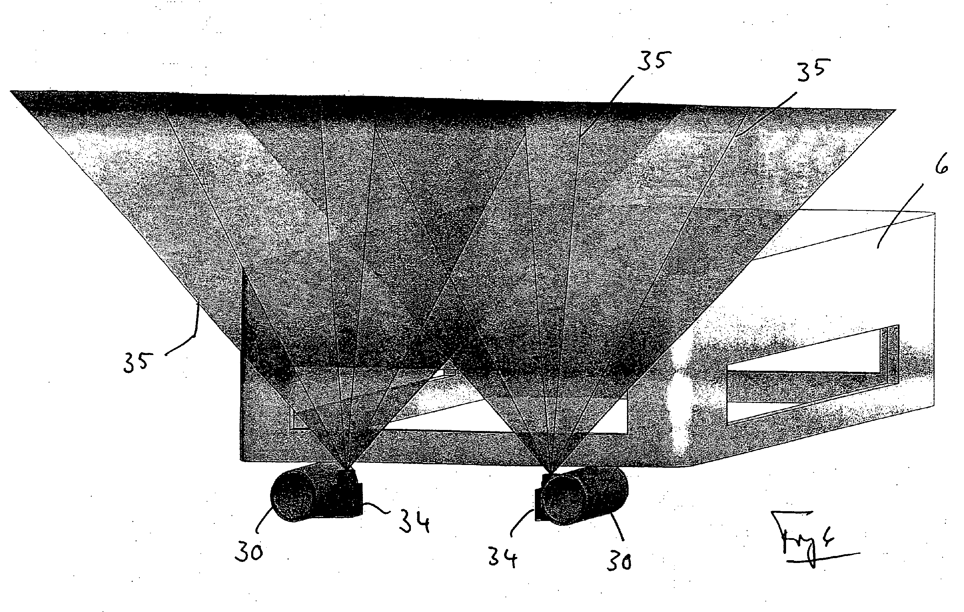

Die Figur 6 zeigt in perspektivischer Darstellung nochmals eines der zu reinigenden Behältnisse 6 zusammen mit den die Förderstrecke für die Behältnisse 6 bildenden rohrförmigen Führungselementen 30. Entlang der Förderstrecke sind an den Führungselementen 30 verteilt Spritzdüsen 34 vorgesehen, über die eine Abspritzung, insbesondere auch Innenabspritzung der Behältnisse 6 erfolgt. Es besteht hierbei insbesondere auch die Möglichkeit, die aus den Spritzdüsen 34 austretenden Spritzstrahlen 35 so einzustellen, dass durch diese, auf Flächen der Behältnisse 6 auftreffenden Strahlen 35 zumindest eine Reduzierung der Kräfte erreicht wird, mit denen die Behältnisse 6 gegen die Führungselemente 30 anliegen, um so eine besonders schonende Behandlung der Behältnisse 6 zu erreichen. Die Versorgung der Spritzdüsen 34 mit der Spritzflüssigkeit erfolgt beispielsweise über die rohrförmig ausgebildeten Führungselemente 30.

Vorstehend wurde davon ausgegangen, dass die Behältnisse 6 auf der von den Führungen gebildeten wendelartigen Transportstrecke durch die von den beiden Drehkreuzen 28 und 29 und den Stangen 11 gebildete Vorschubeinrichtung 33 bewegt werden. Selbstverständlich sind auch anders ausgebildete Vorschubeinrichtungen denkbar. Wesentlich ist bei der erfindungsgemäßen Vorrichtung aber, dass an der jeweiligen Vorschubeinrichtung mit dieser mitbewegte Spritz- oder Reinigungsdüsen vorgesehen sind, und zwar im Abstand von den mit den Behältnissen (6) zusammenwirkenden Anlagenflächen der Vorschubeinrichtung, so dass mit diesen Spritzdüsen die in Vorschub- oder Transportrichtung nacheilenden Seiten, aber auch die in Vorschub- oder Transportrichtung vorauseilenden Seiten mit der aus diesen Düsen austretenden Reinigungsflüssigkeit optimal behandelt werden können. Die Düsen sind dabei so orientiert, dass die austretenden Düsen- oder Reinigungsstrahlen senkrecht oder schräg auf die betreffenden Flächen auftreffen, wie dies für eine optimale Reinigung erforderlich ist. Die Düsen können insbesondere auch als rotierende Düse ausgebildet sein, z.B. von rotierenden Düsen, die in Form von Reaktionsturbinen (Segersches Wasserrad) arbeiten.

Weiterhin besteht die Möglichkeit, die Drehachse der Vorschubeinrichtung 33 leicht gegenüber der Achse der wendelartigen, von den Führungen 30 gebildeten Transportstrecke anzuordnen, so dass sich der Bereich, in dem der jeweilige Mitnehmer 20 gegen die mit diesen mitgeführten Behältnisse 6 anliegt, während jedes vollen Umlaufs der Vorschubeinrichtung 33 jeweils verändert und dadurch jedes Behältnis auch an seiner gegen einen Mitnehmer 20 anliegenden Fläche vollständig gereinigt wird.

### Bezugszeichenliste

- 1: Reinigungskammer
- 2: Rohrträger
- 3: Verbindungsträger
- 4: Antrieb für Vorschubeinrichtung, z.B. Drehkreuz
- 5: Wendel
- 6: Behältnis
- 6.1, 6.2: Seite
- 7: Vorratstank
- 8: Pumpe
- 9: Filtereinrichtung
- 10: Verteilerrohr
- 11: Stange oder Mitnehmer
- 12: Düsenträger
- 13: Spritzdüsen
- 14: Lager
- 15: Beschickungseinrichtung
- 16: Antrieb der Beschickungsstation
- 17: Entladestation
- 18: Antrieb Entladestation
- 19: Pfeilrichtung für Beschicken bzw. Entladen
- 20: Stange
- 21,22: Düsen
- 25: Abdeckblech
- 26: Wendelplattform
- 27: Düsenrohr
- 28, 29: Drehkreuz
- 30: Führungselement
- 32: Reaktionsturbinen
- 33: Vorschubeinheit
- 34: Spritzdüsen
- 35: Spritzstrahl
- V: Vorreinigungsstrecke
- E: Entreinigungsstrecke
- Ü: Übergabestrecke

## Patentansprüche

1. Vorrichtung zum Reinigen von Behältnissen (6), z.B. von Behältnissen von Flaschen mit einer wendelartigen Transporteinrichtung, auf der die Behältnisse (6) durch eine Reaktionskammer (1) auf einer Transportstrecke zwischen einer Beschickungsstation (15) und einer Entnahmestation (17) transportiert werden, wobei die Transportstrecke von einer wendelartigen Führung (30) und von einer um die Achse der wendelartigen Führung umlaufend antreibbaren Vorschubeinrichtung (33) gebildet ist, **dadurch gekennzeichnet, dass** an der Vorschubeinrichtung (33) mit dieser mitbewegte Spritz- oder Reinigungsdüsen (21, 22) vorgesehen sind, und zwar zur Behandlung von in Transportrichtung (B) vorauseilenden bzw. nacheilenden Flächen oder Seiten (6.1, 6.2) der auf der Transportstrecke bewegten Behältnisse (6).

2. Vorrichtung nach Anspruch 1, **dadurch gekennzeichnet, dass** die Achse der wendelartigen Führung (30) eine vertikale oder im Wesentlichen vertikale Achse ist.

3. Vorrichtung nach Anspruch 1 oder 2, **dadurch gekennzeichnet, dass** die Vorschubeinheit (33) drehkreuzartig ausgebildet ist.

4. Vorrichtung nach Anspruch 3, **dadurch gekennzeichnet, dass** die Vorschubeinheit (33) wenigstens zwei Drehkreuze (28, 29) aufweist, die jeweils aus mehreren Armen bestehen und um die Vorrichtungsachse rotierend antreibbar sind.

5. Vorrichtung nach Anspruch 4, **dadurch gekennzeichnet, dass** die Arme der Drehkreuze (28, 29) jeweils über parallel zur Vorrichtungsachse orientierte Stangen miteinander verbunden sind, und dass an diesen Stangen (11) oder an dortigen Düsenhaltern die mit der Vorschubeinrichtung mitbewegten Düsen vorgesehen sind.

6. Vorrichtung nach einem der vorhergehenden Ansprüche, **dadurch gekennzeichnet, dass** die Vorschubeinrichtungs-Anlage oder Mitnehmer für die Behältnisse (6) bildet, und dass die mit der Vorschubeinrichtung (33) mitbewegten Düsen (21, 22) von den von den Mitnehmern (20) gebildeten Anlageflächen beabstandet sind.

7. Vorrichtung nach einem der vorhergehenden Ansprüche, **dadurch gekennzeichnet, dass** die Mitnehmer (20) bzw. die von diesen gebildeten Anlageflächen von sich parallel zur Vorrichtungsachse erstreckenden Mitnehmerelementen, beispielsweise Stangen gebildet sind.

8. Vorrichtung nach einem der vorhergehenden Ansprüche, **dadurch gekennzeichnet, dass** zusätzlich zu den mit der Vorschubeinrichtung (33) mit bewegten Düsen (21, 22) weitere Reinigungs-oder Spritzdüsen (13, 32), insbesondere auch zur Behandlung bzw. Reinigung der Behältnisse (6) an weiteren Flächen außerhalb der in Transportrichtung vorauseilenden bzw. nacheilenden Seite.
